# EUROPÄISCHE PATENTSCHRIFT

(11) **EP 0 949 095 B1**
(45) Veröffentlichungstag und Bekanntmachung des Hinweises auf die Patenterteilung: **02.07.2003**
(21) Anmeldenummer: 98106321.7
(22) Anmeldetag: 07.04.1998
(51) Int. Cl.: B60H 1/00, B60H 1/03, F01P 3/20

(54) **Einrichtung zur Kühlung von Antriebseinheiten und zur Innenraumbeheizung eines Hybridfahrzeuges**
Device for cooling engines and for heating the interior of a hybrid vehicle
Dispositif de refroidissement des moteurs et du chauffage de l'intérieur d'un véhicule hybride

(43) Veröffentlichungstag der Anmeldung: 13.10.1999
(73) Patentinhaber: The Swatch Group Management Services AG, 2501 Biel (CH)
(72) Erfinder: Sonntag, Rainer, 6264 Pfaffnau (CH); Apter, Robert, 2504 Biel (CH)
(74) Vertreter: Balsters, Robert

(56) Entgegenhaltungen:
- DE-A- 3 245 740
- DE-A- 3 447 182
- DE-A- 4 435 693
- DE-C- 4 431 191
- US-A- 5 531 285

## Beschreibung

Die Erfindung betrifft eine Einrichtung zur Kühlung von Antriebseinheiten und zur Innenraumbeheizung eines Hybridfahrzeuges nach dem Oberbegriff des Anspruchs 1. Unter einem Hybridfahrzeug wird allgemein ein Fahrzeug verstanden, welches Antriebsmittel verschiedener Natur aufweist. Insbesondere betrifft dies die Kombination zwischen einer Brennkraftmaschine und einem oder mehreren, direkt mit Antriebsrädern gekoppelten Elektromotoren.

Dokument DE-A1 44 35 693 offenbart eine Einrichtung zur Kühlung von Antriebseinheiten und zur Innenraumbeheizung eines Fahrzeuges nach dem Oberbegriff des Anspruchs 1. Ein Umschaltventil ist im zweiten Kühlerbypass zwischen der zweiten Wärmequelle (ein Zusatzheizgerät) und der Wärmequelle geschaltet. Der zweite Kühlerbypass mündet in die Rückverbindung zwischen der Sammelstelle des ersten Kühlerbypasses und dem Verbrennungsmotor.

Bei einem Serie-Hybridfahrzeug beispielsweise steht die Brennkraftmaschine bzw. der Verbrennungsmotor in Antriebsverbindung mit einer als Generator betreibbaren, elektrischen Maschine, welche im Verbrennungsmotor-Betriebsmodus die Elektroantriebsmotoren mit Energie versorgt. Im Elektro-Betriebsmodus hingegen werden die Elektroantriebsmotoren von einer Batterie gespeist. Typisch für das Serie-Hybridfahrzeug ist, dass der Verbrennungsmotor nicht in mechanischer Antriebsverbindung mit den Rädern steht.

Bei einem Parallel-Hybridfahrzeug allerdings steht der Verbrennungsmotor in mechanischer Antriebverbindung mit den Rädern, wie es bei einem konventionellen Fahrzeug der Fall ist, während der Antrieb im Elektro-Betriebsmodus durch die Elektromotoren erfolgt und der Verbrennungsmotor wahlweise abgekoppelt oder zur Unterstützung hinzugezogen werden kann.

Weiter sind verschiedenste andere Formen von Hybridfahrzeugen bekannt, insbesondere auch Mischformen zwischen Serie- und Parallelhybridfahrzeugen.

Verschiedenste Heizeinrichtungen für Elektro- oder Hybridfahrzeuge sind bereits bekannt. Hier sind insbesondere diejenigen von Interesse, bei welchen der Heiz- und der Kühlkreislauf fluidisch miteinander verbunden sind bzw. ein Heizwärmetauscher vom Kühlmittel des Verbrennungsmotors durchströmt wird.

In der DE-A1 32 45 740 beispielsweise wird für einen Hybrid-Omnibus vorgeschlagen, eine kraftstoffbetriebene sowie eine elektrisch betriebene Heizung in Reihe in den Kühlkreis des Verbrennungsmotors einzubinden, um unter anderem bei abgeschaltetem Verbrennungsmotor das Kühlwasser auf einer bestimmten Minimaltemperatur zu halten, damit ein Start jederzeit unter guten betrieblichen Bedingungen bzw. günstigen Abgaswerten möglich ist.

Für ein netzunabhängiges, batteriebetriebenes Hybridfahrzeug ist eine Aufrechterhaltung der Kühlwassertemperatur im Elektro-Betriebsmodus zur Verbesserung der Startbedingungen des Verbrennungsmotors nicht sinnvoll, da die Batterien stark belastet und der Aktionsradius eingeschränkt würde.

Der vorliegenden Erfindung liegt daher die Aufgabe zugrunde, eine kombinierte Kühl- und Heizeinrichtung für ein Hybridfahrzeug zu schaffen, bei welcher der Heizkreis im Verbrennungsmotor-Betriebsmodus Abwärme vom Verbrennungsmotor beziehen kann, während dieser im Elektro-Betriebsmodus zwecks Energieeinsparung vom Heizkreis abgekoppelt sein soll.

Die erfindungsgemässe Lösung dieser Aufgabe ergibt sich aus den Merkmalen des kennzeichnenden Teiles von Anspruch 1.

Vorteilhafte Ausführungsformen gehen aus den abhängigen Ansprüchen hervor.

Die erfindungsgemässe Lösung ermöglicht, dass die Fahrgastzelle über denselben Wärmetauscher im Verbrennungsmotor- wie im Elektro-Betriebsmodus beheizt werden kann, wobei im Verbrennungsmotor-Betriebsmodus Abwärme des Verbrennungsmotors genutzt wird, während dieser im Elektro-Betriebsmodus zwecks Reduzierung von Wärmeverlusten vom Wärmetauscher fluidisch abgekoppelt ist. Durch den sehr einfachen Aufbau der erfindungsgemässen Einrichtung ergibt sich eine besonders kostengünstige, auf einfache Weise steuerbare, nicht störanfällige Lösung.

Weitere Vorteile und vorteilhafte Ausgestaltungen der Erfindung gehen aus der weiteren Beschreibung hervor.

Die Erfindung ist nachfolgend im Sinne nicht ausschliessender Ausführungsbeispiele anhand eines beliebigen Serie-Hybridfahrzeuges näher erläutert, wobei
- Figur 1 eine erste Ausführungsform und
- die Figuren 2 und 3 weitere Ausführungsformen nach der Erfindung zeigen.

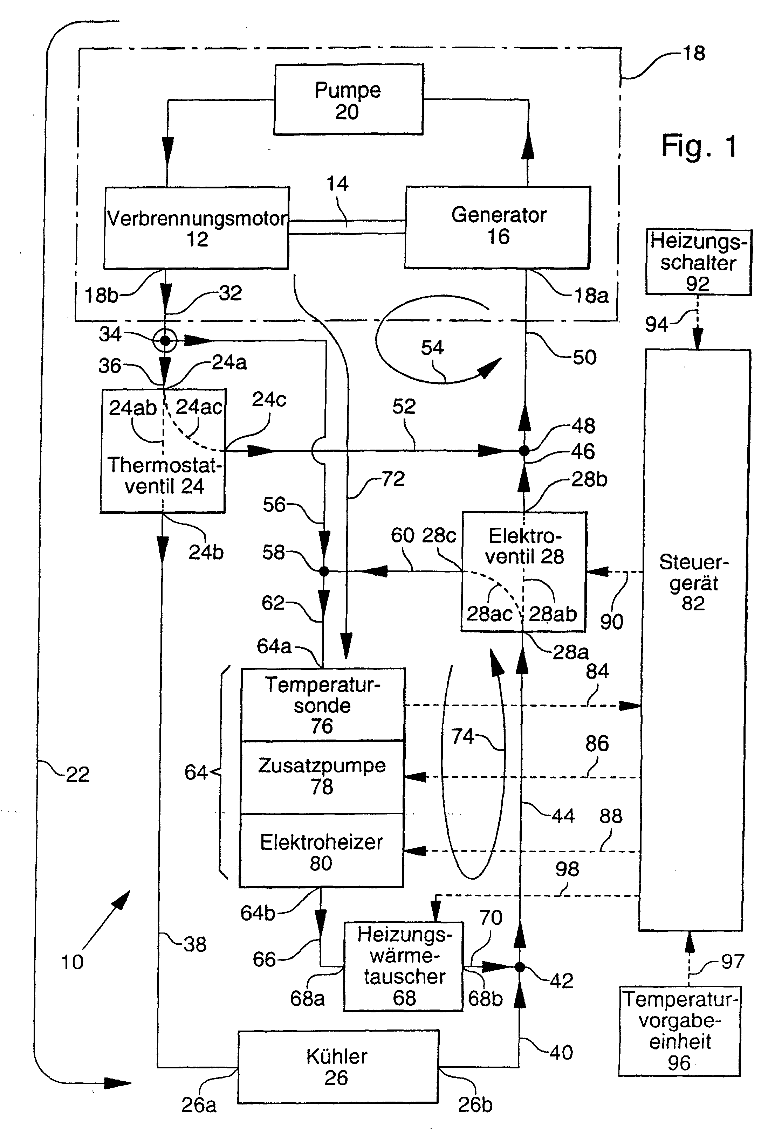

In Figur 1 ist eine mit 10 bezeichnete Einrichtung zur Innenraumbeheizung eines Fahrzeuges mit Serie-Hybridantrieb gezeigt, bei welchem ein Verbrennungsmotor 12 in Antriebsverbindung 14 mit einer als Generator 16 betreibbaren, elektrischen Maschine steht. Der Verbrennungsmotor 12 und der Generator 16 sind vorteilhafterweise als kompakte Einheit 18 ausgebildet, wie dies durch Strich-Punkt-Linien angedeutet ist, wobei hierzu auch noch eine mechanische, durch den Verbrennungsmotor 12 angetriebene oder elektrisch betriebene Kühlmittelpumpe 20 dazugezählt werden kann.

Alle drei Komponenten 12, 16 und 20 sind in Reihe in einem Kühlkreis 22 eingebunden. Der Generator 16 ist bezüglich der Kühlmittel-Strömungsrichtung mit Vorteil vor den Verbrennungsmotor 12 zu schalten, da seine Arbeitstemperatur unterhalb derjenigen des Verbrennungsmotors 12 liegt. Die Anordnung der Pumpe 20 ist nicht von Bedeutung und kann, wie in Figur 1 gezeigt, zwischen Verbrennungsmotor 12 und Generator 16 vorgesehen sein. Gegen aussen weist die Verbrennungsmotor-Generator-Einheit 18 einen auf den Generator 16 führenden Kühlmitteleingang 18a und einen vom Verbrennungsmotor 12 abgehenden Kühlmittelausgang 18b auf.

Ebenfalls in Reihe in denselben Kühlkreis 22 eingebunden sind in Kühlmittelfliessrichtung ein Zwei-Weg-Thermostat- bzw. Zwei-Weg-Thermoventil 24, ein Kühler 26 sowie ein Zwei-Weg-Elektroventil 28. Dabei führt der Kühlmittelausgang 18b der Verbrennungsmotor-Generator-Einheit 18 über eine Leitung 32 auf eine Abzweigstelle 34, von welcher eine Leitung 36 ausgeht und mit einem Eingang 24a des Thermoventils 24 verbunden ist. Das Thermostatventil 24 weist einen Ausgang 24b auf, der über eine Leitung 38 mit einem Eingang 26a des Kühlers 26 verbunden ist. Vom Ausgang 26b des Kühlers 26 wird das Kühlmittel über eine rückführende Leitung 40 auf eine Sammelstelle 42 geleitet, von der eine weitere Leitung 44 am Eingang 28a des Elektroventils 28 angeschlossen ist. Das Elektroventil 28 weist einen Ausgang 28b auf, der über eine Leitung 46 auf eine weitere Sammelstelle 48 führt, die über eine Leitung 50 mit dem Eingang 18a der Verbrennungsmotor-Generator-Einheit 18 in Verbindung steht. Der Kühlkreis 22 verläuft also entlang der Leitungen bzw. Leitungsabschnitte 32, 36, 38, 40, 44, 46 und 50, wobei die Leitungsabschnitte 32, 36, 38 in Bezug auf den Kühler 26 eine Hinverbindung und die mit 40, 44, 46, 50 bezeichneten Leitungsabschnitte eine Rückverbindung bilden.

Das Thermostatventil 24 weist einen weiteren Ausgang 24c auf, der über eine als Kühlerbypass wirkende Leitung 52 auf die Sammelstelle 48 führt, so dass entlang der Leitungen 32, 36, 52 und 50 ein weiterer Kühlkreis 54 vorliegt.

Das Thermostatventil 24 entspricht herkömmlicherweise einem in Funktion der Kühlmitteltemperatur selbsttätig schaltenden Zwei-Wege-Umschaltventil. Oberhalb einer Schwellentemperatur T1 besteht eine Durchlassverbindung zwischen dem Eingang 24a und dem Ausgang 24b, wie dies durch eine gestrichelte Linie 24ab angedeutet ist, während der Ausgang 24c und hiermit auch der Kühlkreis 54 blockiert sind. Bei einer Kühlmitteltemperatur kleiner T1 steht der Ausgang 24c mit dem Eingang 24a in Verbindung, worauf eine mit 24ac bezeichnete, gestrichelte Linie hinweist, während der Ausgang 24b verriegelt ist. In diesem Fall liegt eine Überbrückung des Kühlers 26 durch die Bypassleitung 52 vor. Je nach Thermostat-Typ sind im Bereich von T1 beide Ausgänge 24b und 24c offen oder teildurchlässig und es kann ein mehr oder weniger weiter Übergangsbereich gewählt werden, d.h. es kann vorgesehen werden, dass Übergangsschaltzustände bereits mehr oder weniger deutlich unterhalb von T1 einsetzen und gegebenenfalls bis zu einer Temperatur reichen, die mehr oder wenig grösser als T1 ist. Als Schalt-Schwellentemperatur T1 kann beispielsweise 90°C herangezogen werden.

Da das Thermostatventil 24 gewöhnlich direkt auf dem Verbrennungsmotor 12 angebracht und die Abzweigstelle 34 von aussen nicht zugänglich ist, sondern sich im Thermostatventil 24 befindet, verfügt das Thermostatventil 24 über einen dritten Ausgang, der direkt bzw. ungeschaltet mit dem Kühlmittelausgang 18b des Verbrennungsmotors 12 verbunden ist. Funktionsmässig ist es jedoch einerlei, ob die Abzweigstelle 34 im Thermostatventil 24 angeordnet ist, wie es oft in der Praxis der Fall ist, oder vor diesem, wie in Figur 1 dargestellt. Aus diesem Grund kann auch das Thermostatventil 24 als Teil der Verbrennungsmotor-Generator-Einheit 18 betrachtet werden.

Von der Abzweigstelle 34 führt eine Leitung 56 auf eine Sammelstelle 58, in welche eine Leitung 60 mündet, die von einem weiteren Ausgang 28c des Elektroventils 28 herrührt und einen Verbrennungsmotorbypass bildet. Eine von der Sammelstelle 58 wegführende Leitung 62 ist mit einem Eingang 64a einer Heizeinheit 64 verbunden, deren Ausgang 64b über eine Leitung 66 am Eingang 68a eines Heizungswärmetauschers 68 angeschlossen ist, der über eine nicht gesondert dargestellte Mischluftklappe zur Regulierung der Wärmeübertragung in den Fahrzeuginnenraum verfügt. Der Heizungswärmetauscher 68 weist einen Kühlmittelausgang 68b auf, der über eine Leitung 70 auf die Sammelstelle 42 führt.

Ein zwischen der Abzweig- 34 und der Sammelstelle 42 parallel zum Kühlkreis 22 verlaufender Heizkreis 72 führt von der Verbrennungsmotor-Generator-Einheit 18 über die Heizeinheit 64, den Heizungswärmetauscher 68 und das Elektroventil 28 bzw. über die Leitungen 32, 56, 62, 66, 70, 44, 46, 50. Die Verbindung zwischen der Abzweigstelle 34 und der Sammelstelle 42 über die Leitungen 56, 62, 66 und 70 bildet nebst dem Kühlerbypass 52 einen weiteren Kühlerbypass. Weiter ist ein Heizkreis 74 vorhanden, der die Komponenten Heizeinheit 64, Heizungswärmetauscher 68 und Elektroventil 28 bzw. die Leitungen 60, 62, 66, 70 und 44 einschliesst.

Die Heizeinheit 64 besteht in Kühlmittel-Fliessrichtung betrachtet, d.h. vom Eingang 64a Richtung Ausgang 64b, im wesentlichen aus einer Temperatursonde 76, einer zusätzlichen Elektropumpe 78 und einem Elektroheizer 80. Die Temperatursonde 76 ermittelt die Kühlmitteltemperatur also vor dem Elektroheizer 80. Wiederum ist die Anordnung der Zusatzpumpe 78 innerhalb der Heizeinheit 64 unbedeutend. Alle drei Komponenten der Heizeinheit 64 sind elektrisch mit einem Steuergerät 82 verbunden, wobei die Temperatursonde 76 ein Signal 84 an das Steuergerät 82 abgibt, während die Zusatzpumpe 78 und der Elektroheizer 80 jeweils entsprechend mit Leistung versorgt werden, wie dies durch die Bezugszeichen 86 und 88 angedeutet ist. Das Steuergerät 82 kann unter anderem einen Mikroprozessor aufweisen.

Ebenfalls mit dem Steuergerät 82 verbunden ist das Elektroventil 28, welches von diesem ein Steuersignal 90 erhält, um gemäss mehreren, weiter unten aufgeführten Kriterien den Eingang 28a entweder mit dem Ausgang 28b oder dem Ausgang 28c zu verbinden, was jeweils mit einer gestrichelten Linie 28ab bzw. 28ac schematisch dargestellt ist.

Weiter steht ein vom Fahrzeuginsassen betätigbarer Heizungsschalter 92 über ein Steuersignal 94 mit dem Steuergerät 82 in Verbindung. Ebenso ist eine vom Fahrzeuginsassen bedienbare Einheit 96 zur Vorgabe der Innenraumtemperatur an das Steuergerät 82 angeschlossen und überträgt diesem ein Steuersignal 97.

Des weiteren erhält die nicht gesondert dargestellte Mischluftklappe des Heizungswärmetauschers 68 gemäss Figur 1 vom Steuergerät 82 ein Steuersignal 98.

Im Zusammenhang mit der nun folgenden Funktionsbeschreibung der erfinderischen Kühl- und Heizeinrichtung sei nochmals erwähnt, dass das Thermostatventil 24 selbsttätig bei einer Schwellentemperatur T1 von beispielsweise 90°C schaltet bzw. innerhalb einer mehr oder weniger weiten Temperaturbandbreite die Durchlasseigenschaften kontinuierlich ändert. Liegt die Kühlmitteltemperatur im Thermostatventil 24 unterhalb T1, so ist der Kühlkreis 54 aktiv, d.h. die aus dem Verbrennungsmotor 12 beim Ausgang 18b austretende Kühlflüssigkeit wird über den Durchlass 24ac und die Bypassleitung 52 auf den Eingang 18a des Generators 16 zurückgeführt, wodurch ein schnelles Aufwärmen des Verbrennungsmotors 12 insbesondere beim Kaltstart erreicht wird. Überschreitet die Kühlmitteltemperatur die Schwelle T1, so zirkuliert das Kühlmittel im Kühlkreis 22 und wird über den Kühler 26 geführt.

Zur Funktionsbeschreibung der Erfindung wird zu Gunsten der Übersichtlichkeit auf die folgende Tabelle Bezug genommen:

| Heizungsschalter 92 | | Verbrenn. Generator Einh. 18 | | Elektroventil 28 | | Zusatzpumpe 78 | | Elektroheizer 80 | | jeweils aktiver Kühl- bzw Heizkreis |
|---|---|---|---|---|---|---|---|---|---|---|
| ein | aus | ein | aus | 28ab | 28ac | ein | aus | ein | aus | |
| - | X | - | X | - | X | - | X | - | X | - |
| - | X | X | - | X | - | - | X | - | X | 22/54 +72 |
| X | - | - | X | - | X | X | - | ∗ | | 74 |
| X | - | X | - | X | - | - | X | ∗ | | 22/54 +72 |

Verbrennungsmotor-Generator-Einheit 18 "ein" bedeutet, dass ein Verbrennungsmotor-Betriebsmodus vorliegt, d.h. der Verbrennungsmotor 12 in Betrieb ist und Leistung an den Generator 16 abgibt, mit welcher bekanntlich Elektroantriebsmotoren gespeist werden, während unter Verbrennungsmotor-Generator-Einheit 18 "aus" ein Elektro-Betriebsmodus vorliegt, bei welchem der Verbrennungsmotor 12 abgestellt ist und die Elektroantriebsmotoren über eine Batterie gespeist werden.

Grundsätzlich ist im Verbrennungsmotor-Betriebsmodus der Heizkreis 72 und je nach Kühlmitteltemperatur entweder der Kühlkreis 22 oder 54 bzw. beide teilweise aktiv. Um auf ein weiteres Schaltelement verzichten zu können, strömt im Verbrennungsmotor-Betriebsmodus auch bei ausgeschaltetem Heizungsschalter 92 Kühlmittel durch den Heizkreis 72, nur bringt das Steuergerät 82 mittels des Steuersignals 98 die Mischluftklappe in eine Stellung, in welcher dem Heizungswärmetauscher 68 zur Beheizung der Fahrgastzelle keine Wärme entnommen wird.

Im Elektro-Betriebsmodus hingegen ist lediglich der Heizkreis 74 aktiv. Dies jedoch nur dann, wenn sich der Heizungsschalter auf "ein" befindet.

Die Abzweigstelle 34, die verschiedenen Leitungsdurchmesser, die Sammelstelle 42 usw. sind übrigens derart auszulegen, dass ein geeignetes Mass an Wärmeenergie in den Innenraum abgegeben werden kann, sei es mittels des Heizkreises 72 im Verbrennungsmotor-Betriebsmodus oder mittels des Heizkreises 74 im Elektro-Betriebsmodus.

Weiter zeigt die Tabelle den Zustand des Elektroventils 28, der Zusatzpumpe 78 und des Elektroheizers 80 in Funktion des vom Fahrer betätigbaren Heizungsschalters 92 und des Betriebszustandes der Verbrennungsmotor-Generator-Einheit 18:

Das Steuergerät 82 bestimmt den Schaltzustand des Elektroventils 28 unabhängig von der Position des Heizungsschalters 92 lediglich in Funktion des Betriebszustandes der Verbrennungsmotor-Generator-Einheit 18. Im Verbrennungsmotor-Betriebsmodus, d.h. bei laufendem Verbrennungsmotor 12, ist stets nur der Durchlass 28ab aktiv, im Elektro-Betriebsmodus hingegen der Durchlass 28ac.

Das Elektroventil 28 hat demnach zur Aufgabe, im Elektro-Betriebsmodus die Verbrennungsmotor-Generator-Einheit 18 vom Heizungswärmetauscher 68 abzukoppeln, damit dem Heizsystem nicht unnötig Wärme entzogen wird, wobei das Kühlwasser nur noch im Heizkreis 74 zirkuliert. Die Leitung 60 kann demnach als Verbrennungsmotor-Generator-Bypass betrachtet werden. Im Verbrennungsmotor-Betriebsmodus hingegen ist die Verbindung 28ab, d.h. die Kühlerrücklaufverbindung zur Verbrennungsmotor-Generator-Einheit 18 unbedingt zu gewähren, weshalb das Elektroventil 28 aus Sicherheitgründen derart zu schalten bzw. auszubilden ist, dass bei ausfallendem Ansteuersignal 90 der Durchlass 28ab sichergestellt ist. Nebenbei erwähnt, ist die Stellung des Elektroventils 28 bei Heizungsschalter "aus" im Elektro-Betriebsmodus unwesentlich, da das Kühlwasser weder zum Heizen noch zum Kühlen benötigt wird.

Weiter ist ersichtlich, dass bei der Heizungsschalterstellung "aus" die Zusatzpumpe 78 und die Elektroheizung 80, unabhängig davon, ob ein Verbrennungsmotoroder Elektro-Betriebsmodus vorliegt, ausser Betrieb sind. Bei Heizungsschalter "ein" ist die Zusatzpumpe 78 dann in Betrieb zu nehmen, wenn das Fahrzeug auf Elektro-Betriebsmodus geschaltet ist und die mechanische Pumpe 20 stillsteht, das Kühlmittel aber zum Durchströmen des Heizungswärmetauschers 68 befördert werden muss. Im Verbrennungsmotor-Betriebsmodus dagegen braucht die Zusatzpumpe 78 nicht aktiv zu sein, da die Pumpe 20 das Kühlmittel durch den Heizungswärmetauscher 68 befördert.

Die Bedingungen zum Betrieb des Elektroheizers 80 sind etwas umfangreicher und deshalb in der Tabelle nicht aufgeführt, worauf das Sternzeichen * hinweisen soll:

Der Elektroheizer 80 wird durch die Steuereinheit 82 nicht nur in Abhängigkeit des Heizungsschalters 92 und der Fahrzeugbetriebsart ein- und ausgeschaltet, sondern auch in Funktion der durch die Temperatursonde 76 ermittelten Kühlmitteltemperatur. Dabei ist es vorgesehen, den Elektroheizer 80 einzuschalten, wenn eine Schwellentemperatur T3 von beispielsweise 70°C unterschritten, und denselben auszuschalten, wenn eine Schwellentemperatur T2 von beispielsweise 75°C überschritten wird. Daraus geht, sofern sich der Heizungsschalter 92 auf der Position "ein" befindet, folgendes hervor:

Wird der bereits einige Zeit laufende Verbrennungsmotor 12 abgestellt und auf Elektro-Betriebsmodus umgeschaltet, dann liegt die Kühlmitteltemperatur im Bereich der Schalttemperatur des Thermostatventils 24, d.h. im T1-Bereich von 90°C. Das Kühlmittel reicht zur Innenraumbeheizung also noch vollständig aus, ohne dass der Elektroheizer 80 in Betrieb genommen werden muss. Mit der Zeit sinkt die Kühlmitteltemperatur ab und unterschreitet die 70°C-Schwellentemperatur T3, so dass die Steuereinheit 82 den Elektroheizer 80 einschaltet und solange in Betrieb hält, bis die Schwellentemperatur T2 von 75°C erreicht ist.

Lief der Verbrennungsmotor 12 vor dem Umstellen auf Elektro-Betriebsmodus jedoch noch nicht lange und die von der Temperatursonde 76 gemessene Kühlmitteltemperatur liegt noch unter der Schwellentemperatur T3 von 70°C, so wird der Elektroheizer 80 unmittelbar beim Umstellen auf Elektro-Betriebsmodus in Betrieb genommen, nach wie vor davon ausgehend, dass sich der Heizungsschalter 92 auf der Position "ein" befindet.

Damit sich die Wärmeentwicklung im Fahrgastraum bei Fahrtbeginn im Verbrennungsmotor-Betriebsmodus und bei kaltem Verbrennungsmotor möglichst ähnlich wie in einem herkömmlichen Kraftfahrzeug verhält, kann während der Aufwärmphase des Verbrennungsmotors 12 auf den Einsatz des Elektroheizers 80 verzichtet werden, was den Vorteil mit sich bringt, dass die Batterien geschont werden. Ist das Fahrzeug einmal in Betrieb, so soll die Heizung unabhängig von der Fahrzeugbetriebsart funktionieren, wie dies wiederum bei herkömmlichen Verbrennungsmotor-Kraftfahrzeugen der Fall ist. Entwickelt sich der Kühlmitteltemperaturanstieg aufgrund der Fahrweise jedoch ungewöhnlich langsam, so wird dies vom Steuergerät 82 erkannt und der Elektroheizer 80 gegebenenfalls eingeschaltet.

Weiter kann bei eingeschalteter Heizung und kalter Verbrennungsmotor-Generator-Einheit 18 vorgesehen werden, beim Umstellen vom Elektro- in den Verbrennungsmotor-Betriebsmodus das Kühlmittel noch während einer gewissen Zeit durch den Elektroheizer 80 weiter zu heizen, um dem für den Fahrer unerwarteten Abkühleffekt durch die Verbrennungsmotor-Generator-Einheit 18 entgegenzuwirken. Aufschluss über die Kühlwassertemperatur kann die Temperatursonde 76 geben, wobei das Steuergerät 82 wiederum beim Übersteigen von T2 bei 75°C die Abschaltung des Elektroheizers 80 einleitet.

Da das Thermostatventil 24 im Verbrennungsmotor-Betriebsmodus bei eingeschalteter Heizung die Kühlwassertemperatur auf T1 von 90°C ausregelt und der Kühlwasserdurchsatz im Heizungswärmetauscher 68 mit der Drehzahl des Verbrennungsmotors 12 bzw. der Pumpe 20 ändert, ändert sich ebenfalls die Heizleistung des Heizungswärmetauscher 68. Deshalb ist dieser, wie schon erwähnt, mit einer in Figur 1 nicht dargestellten Mischluftklappe ausgerüstet, welche beispielsweise vom Steuergerät 82 mittels des Steuersignals 98 angesteuert dem Kühl- und Heizsystem je nach Wärmebedarf mehr oder weniger Energie entzieht. Diese Regelung kann in Funktion eines Signals einer ebenfalls nicht dargestellten Temperatursonde erfolgen, welche die Innenraumtemperatur ermittelt. Aus Kostengründen kann die Verstellung der Mischluftklappe aber auch von Hand vorgesehen werden. Weiter ist es möglich, den Kühlwasserdurchsatz durch den Heizungswärmetauscher 68 entsprechend dem gewünschten Wärmebedarf im Fahrgastraum durch ein mechanisches oder auch elektrisch angesteuertes Regulierventil zu variieren.

In Figur 1 nicht dargestellt ist ein Ventilator, der die Wärmeabgabe des Kühlers an die Umgebung verstärkt. Dieser kann unter anderm auch in Funktion des Wärmebedarfs im Innenraum geregelt werden, d.h. dass der Kühler bei grösserer Wärmenachfrage im Innenraum weniger Wärme an die Umgebung abgibt, wobei diese Regeltätigkeit wiederum dem Steuergerät 82 zugeordnet werden kann.

Weiter kann durch ein beispielsweise im Leitungsabschnitt 56 angeordnetes Rückschlagventil verhindert werden, dass im Elektro-Betriebsmodus bei einer Kühlmitteltemperatur oberhalb T1 bzw. oberhalb 90° der Kühler 26 vom Kühlmittel durchströmt wird, da andernfalls der Weg über die Leitung 56, den Durchlass 24ab, die Leitung 38, den Kühler 26 und die Leitung 40 als Heizungswärmetauscher-Bypass wirkt.

Um ein Durchströmen der Zusatzpumpe 78 im Verbrennungsmotor-Betriebsmodus, bei welchem die Pumpe 20 in Betrieb ist, zu vermeiden, kann die Zusatzpumpe 78 mit einem Bypass versehen werden, in dem ein Rückschlagventil angeordnet ist.

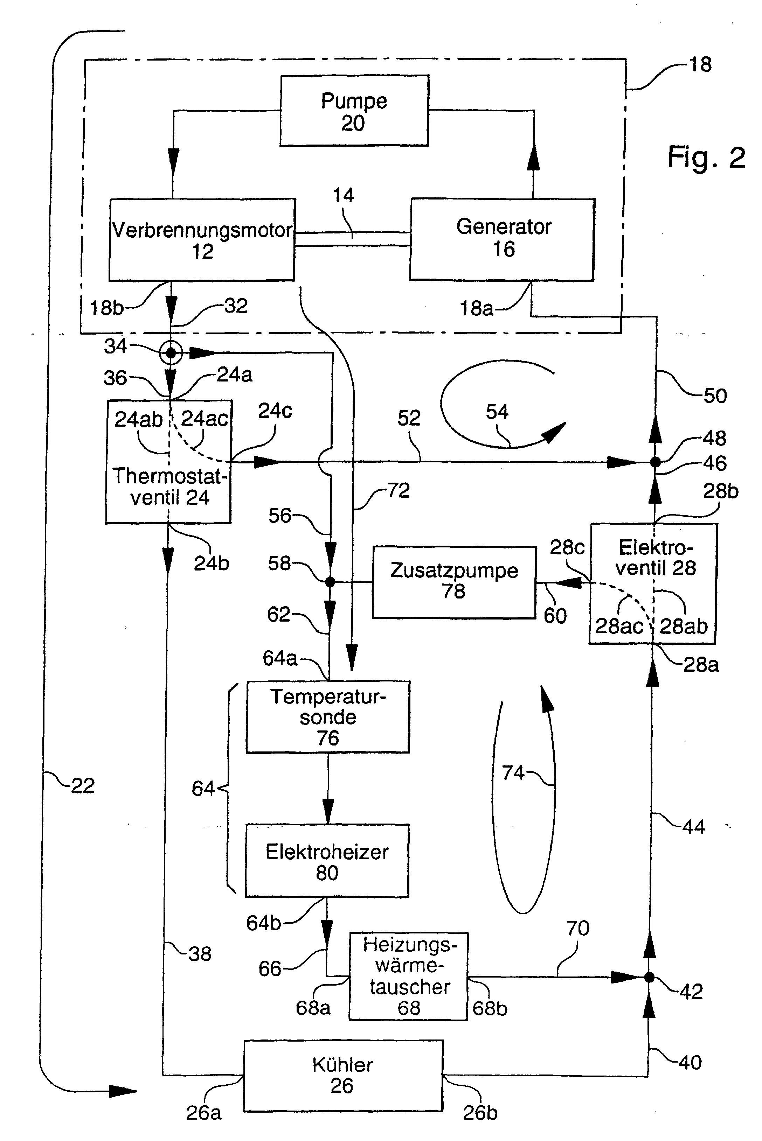

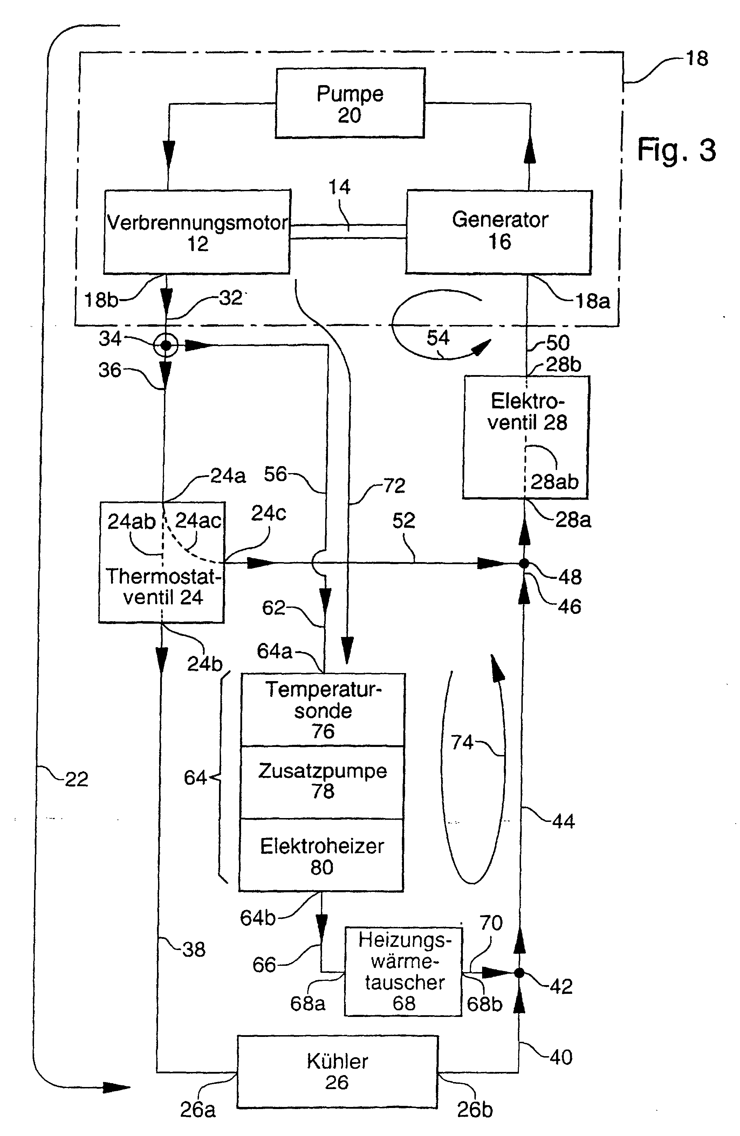

In den Figuren 2 und 3 sind weitere Ausführungsformen der Erfindung dargestellt, wobei darin zugunsten der Übersichtlichkeit die elektrischen Einheiten und Verbindungen weggelassen worden sind. Im allgemeinen gelten mit Ausnahme weniger Änderungen dieselben Bezugsnummern wie in Figur 1. Die Schaltbedingungen für das Thermostatventil 24 und das Elektroventil 28 können ebenfalls dieselben.

In Figur 2 wurde gegenüber Figur 1 die Zusatzpumpe 78 aus der Einheit 64 entfernt und in die Leitung 60 versetzt. Dies bringt den Vorteil mit sich, dass die Zusatzpumpe 78 nur noch dann, wenn sie benötigt wird, nämlich im Elektro-Betriebsmodus, vom Kühlmittel durchflossen wird.

In Figur 3 ist das Elektroventil 28 gegenüber Figur 1 in den Leitungsabschnitt 50 verlegt worden. Weiter entfallen der Durchlass 28ac, die Leitung 60 sowie der Sammelpunkt 58. Das Elektroventil 28 entspricht also vorteilhafterweise lediglich einem einfachen und preisgünstigen Einwegventil mit einem Durchlass 28ab. Im Elektro-Betriebsmodus, d.h. bei unterbrochenem Durchlass 28ab, trennt das Elektroventil 28 nach wie vor die Verbrennungsmotor-Generator-Einheit 18 vom Heizungswärmetauscher 68 ab. Auch ist die Schliessung des Heizkreises 74 gewährleistet, nur verläuft das Kühlmittel im Gegensatz zu Figur 1 über das Thermostatventil 24. Bei einer Kühlmitteltemperatur unterhalb von T1 bzw. 90° und somit aktivem Durchlass 24ac zirkuliert das Kühlmittel über die Leitungsabschnitte 70, 44, 46, 52, 36, 56, 62 und 66, wobei in den Leitungsabschnitten 52 und 36 die Strömungsrichtung entgegen der Pfeilrichtung verläuft. Zwecks Eindämmung von Wärmeverlusten ist der Leitungsabschnitt 52 zu isolieren. Bei einer Temperatur oberhalb T1 werden die Leitungsabschnitte 70, 40, 38, 36, 56, 62 und 66 durchströmt, da der Durchlass 24ab durchlässig ist, wobei in 40, 38 und 36 eine der Pfeilrichtung entgegengesetzte Strömungsrichtung vorliegt. Da im Verbrennungsmotor-Betriebmodus der Durchlass 28ab immer aktiv ist, verhält sich die Ausführungsform von Figur 3 wie diejenige von Figur 1.

Die aufgeführten Temperaturwerte von T1, T2 und T3 können selbstverständlich auch anders gewählt werden.

Grundsätzlich kann der Kühler ein beliebiger Wärmetauscher sein, der überschüssige Abwärme des Verbrennungsmotors an die Umgebung abgeben kann.

Anstelle eines Elektroheizers könnte auch ein Brenner vorgesehen werden, doch ist dies nicht im Sinne des Nullemissionsbetriebes eines Hybridfahrzeuges im Elektro-Betriebsmodus.

Anstelle eines Thermo- bzw. Thermostatventil kann beispielsweise auch ein Elektroventil vorgesehen werden, dass in Funktion der Kühlmitteltemperatur angesteuert wird, oder eine Pumpe mit variabler Pumpleistung.

Es kann weiter sinnvoll sein, den Elektroheizer in den Heizungswärmetauscher zu integrieren, was bedeutet, dass nicht zwangsweise das Kühlmittel aufgeheizt werden muss, sondern direkt der Heizungswärmetauscher.

Die in Figur 1 gezeigte Reihenfolge der Temperatursonde 76, der Zusatzpumpe 78, des Elektroheizers 80 und des Heizungswärmetauschers 68 kann auch anders vorgesehen werden. Beispielsweise kann die Temperatursonde 76 auch unmittelbar vor oder nach dem Elektroheizer 80 angeordnet sein.

Der Elektroheizer 80 kann auch in die Leitung 60 geschaltet werden, jedoch ist so kein Aufheizen des Kühlwassers im Verbrennungsmotor-Betriebsmodus, wenn der Verbrennungsmotor noch kalt ist, möglich. Aus dieser Lösung geht jedoch der Vorteil hervor, dass die Heizeinheit 64 komplett in die Leitung eingesetzt werden kann, so dass ein unnötiges Antreiben der Zusatzpumpe 78 durch die Pumpe 20 wegfällt, wie es Figur 2 zeigt. Bei Bedarf ist ein Rückschlagventil in der Leitung 56 vorzusehen.

Es kann auch sinnvoll sein, das Elektroventil 28, die Heizeinheit 64 und den Heizungswärmetauscher 68 in eine Einheit zu integrieren.

Grundsätzlich können Kühlmittelfliessrichtungen definiert werden, die sich von denjenigen der Figuren 1 bis 4 unterscheiden.

Im übrigen werden Verbrennungsmotor-Generator-Einheiten der gezeigten Art im allgemeinen mit "Power Generating Unit" bezeichnet.

Die Steuereinheit kann Bestandteil der sogenannten "Energie Management Unit" sein.

Obwohl Figur 1 ein Seriehybridfahrzeug betrifft, ist die erfindungsgemässe Lösung für ein Parallelhybridfahrzeug oder verschiedenste Mischformen gleichermassen vorteilhaft.

## Patentansprüche

1. Einrichtung (10) zur Kühlung von Antriebseinheiten und zur Innenraumbeheizung eines Hybridfahrzeuges mit einem Kühlmittelkreislauf (22), in welchen in Reihe ein Verbrennungsmotor (12), der eine erste Wärmequelle bildet, und ein Kühler (26) eingebunden sind, wobei:
- in Kühlmittelfliessrichtung einerseits eine Hinverbindung (32, 36, 38) vom Verbrennungsmotor (12) zum Kühler (26) und anderseits eine Rückverbindung (40, 44, 46, 50) vom Kühler (26) zum Verbrennungsmotor (12) führt,
- in der Hinverbindung (32, 36, 38) ein erstes Ventil (24) zwischengeschaltet ist,
- zwischen dem Verbrennungsmotor (12) und dem ersten Ventil (24) ein erster Hinverbindungsabschnitt (32, 36) sowie zwischen dem ersten Ventil (24) und dem Kühler (26) ein zweiter Hinverbindungsabschnitt (38) angeordnet ist,
- die Einrichtung (10) eine zweite Wärmequelle (80) sowie einen Wärmetauscher (68) zur Innenraumbeheizung des Fahrzeuges aufweist,
- ein vom ersten Ventil (24) ausgehender, erster Kühlerbypass (52) in die Rückverbindung (40, 44, 46, 50) mündet und
- zwischen dem ersten Hinverbindungsabschnitt (32, 36) und der Rückverbindung (40, 44, 46, 50) ein zweiter Kühlerbypass (56, 62, 66, 70) vorgesehen ist, in welchem die zweite Wärmequelle (80) und der Wärmetauscher (68) eingebunden sind,
**dadurch gekennzeichnet,**
- **dass** in der Rückverbindung (40, 44, 46, 50) ein zweites Ventil (28) zwischengeschaltet ist,
- **dass** zwischen dem Kühler (26) und dem zweiten Ventil (28) ein erster Rückverbindungsabschnitt (40, 44) sowie zwischen dem zweiten Ventil (28) und dem Verbrennungsmotor (12) ein zweiter Rückverbindungsabschnitt (46, 50) angeordnet ist, und
- **dass** der zweite Kühlerbypass (56, 62, 66, 70) in den ersten Rückverbindungsabschnitt (40, 44) mündet.

2. Einrichtung nach Anspruch 1, **dadurch gekennzeichnet, dass** der erste Kühlerbypass (52) in den zweiten Rückverbindungsabschnitt (46, 50) mündet.

3. Einrichtung nach Anspruch 1, **dadurch gekennzeichnet, dass** der erste Kühlerbypass (52) in den ersten Rückverbindungsabschnitt (40, 44) mündet.

4. Einrichtung nach einem der vorangehenden Ansprüche, **dadurch gekennzeichnet, dass** das erste Ventil (24) als Zweiwegventil derart ausgebildet ist, dass es einerseits einen ersten Durchlass (24ab) vom Verbrennungsmotor (12) zum Kühler (26) und anderseits einen zweiten Durchlass (24ac) vom Verbrennungsmotor (12) in den erste Kühlerbypass (52) ermöglicht.

5. Einrichtung nach Anspruch 4, **dadurch gekennzeichnet, dass** das erste Ventil (24) ein Thermostatventil ist.

6. Einrichtung nach einem der vorangehenden Ansprüche, **dadurch gekennzeichnet, dass** das zweite Ventil (28) derart ausgebildet ist, um, im Elektro-Betriebsmodus des Hybridfahrzeuges, mindestens einen Unterbruch in der Rückverbindung (40, 44, 46, 50) zu ermöglichen.

7. Einrichtung nach einem der vorangehenden Ansprüche, **dadurch gekennzeichnet, dass** ein vom zweiten Ventil (28) ausgehender Verbrennungsmotorbypass (60) in den zweiten Kühlerbypass (56, 62, 66, 70) mündet.

8. Einrichtung nach Anspruch 7, **dadurch gekennzeichnet, dass** der Verbrennungsmotorbypass (60) in einen Abschnitt (56, 62) des zweiten Kühlerbypasses (56, 62, 66, 70) mündet, der zwischen dem ersten Hinverbindungsabschnitt (32, 36) und dem Wärmetauscher (68) angeordnet ist.

9. Einrichtung nach einem der Ansprüche 7 oder 8, **dadurch gekennzeichnet, dass** das zweite Ventil (28) als Zweiwegventil derart ausgebildet ist, dass es einerseits einen ersten Durchlass (28ab) vom Kühler (26) zum Verbrennungsmotor (12) und anderseits einen zweiten Durchlass (28ac) vom Kühler (26) in den Verbrennungsmotorbypass (60) ermöglicht.

10. Einrichtung nach einem der vorangehenden Ansprüche, **dadurch gekennzeichnet, dass** das zweite Ventil (28) ein Elektroventil ist.

11. Einrichtung nach Anspruch 1, **dadurch gekennzeichnet, dass** im Kühlmittelkreislauf (22) eine erste Kühlmittelpumpe (20) eingebunden ist und die Einrichtung (10) eine zweite Kühlmittelpumpe (78) aufweist.

12. Einrichtung nach Anspruch 1, **dadurch gekennzeichnet, dass** eine Kühlmittelpumpe (78) im zweiten Kühlerbypass (56, 62, 66, 70) eingebunden ist.

13. Einrichtung nach einem der Ansprüche 7 bis 9, **dadurch gekennzeichnet, dass** eine Kühlmittelpumpe (78) im Verbrennungsmotorbypass (60) eingebunden ist.

14. Einrichtung nach einem der vorangehenden Ansprüche, **dadurch gekennzeichnet, dass** die zweite Wärmequelle (80) ein Elektroheizer ist.

15. Einrichtung nach einem der vorangehenden Ansprüche, **dadurch gekennzeichnet, dass** in der Rückverbindung (40, 44, 46, 50) eine als Generator betriebbare elektrische Maschine (16) eingebunden ist, die mit dem Verbrennungsmotor (12) in Antriebsverbindung steht.

## Claims

1. Installation (10) for cooling drive units and for heating the inner space of a hybrid vehicle comprising a coolant circuit (22) in which are connected in series a combustion engine (12) which forms a first heat source, and a cooler (26), wherein :
- in the coolant flow direction, on the one hand, an outgoing connection (32, 36, 38) leads from the combustion engine (12) to the cooler (26) and, on the other hand, a return connection (40, 44, 46, 50) leads from the cooler (26) to the combustion engine (12),
- a first valve (24) is connected in the outgoing connection (32, 36, 38),
- a first outgoing connection section (32, 36) is arranged between the combustion engine (12) and the first valve (24), and a second outgoing connection section (38) is arranged between the first valve (24) and the cooler (26),
- the installation (10) comprises a second heat source (80) and a heat exchanger (68) for heating the inner space of the vehicle,
- a first cooler bypass (52) proceeding from the first valve (24) opens into the return connection (40, 44, 46, 50), and
- a second cooler bypass (56, 62, 66, 70) is provided between the first outgoing connection section (32, 36) and the return connection (40, 44, 46, 50) in which the second heat source (80) and the heat exchanger (68) are connected,
**characterized in that**:
- a second valve (28) is connected in the return connection (40, 44, 46, 50),
- a first return connection section (40, 44) is arranged between the cooler (26) and the second valve (28), and a second return connection section (46, 50) is arranged between the second valve (28) and the combustion engine (12), and
- the second cooler bypass (56, 62, 66, 70) opens in the first retum connection section (40, 44).

2. Installation according to claim 1, **characterized in that** the first cooler bypass (52) opens into the second return connection section (46, 50).

3. Installation according to claim 1, **characterized in that** the first cooler bypass (52) opens into the first return connection section (40, 44).

4. Installation according to one of the preceding claims, **characterized in that** the first valve (24) is formed as a two-way valve in a manner such that it permits, on the one hand, a first connection (24ab) from the combustion engine (12) to the cooler (26) and, on the other hand, a second connection (24ac) from the combustion engine (12) into the first cooler bypass (52).

5. Installation according to claim 4, **characterized in that** the first valve (24) is a thermostat valve.

6. Installation according to one of the preceding claims, **characterized in that** the second valve (28) is formed in a manner such that it permits, in an electric operating mode of the hybrid vehicle, at least an interruption in the retum connection (40, 44, 46, 50).

7. Installation according to one of the preceding claims, **characterized in that** a combustion engine bypass (60) proceeding from the second valve (28) opens into the second cooler bypass (56, 62, 66, 70).

8. Installation according to claim 7, **characterized in that** the combustion engine bypass (60) opens into a section (56, 62) of the second cooler bypass (56, 62, 66, 70) which is arranged between the first outgoing connection section (32, 36) and the heat exchanger (68).

9. Installation according to one of the claims 7 or 8, **characterized in that** the second valve (28) is formed as a two-way valve in a manner such that it permits, on the one hand, a first connection (28ab) from the cooler (26) to the combustion engine (12) and, on the other hand, a second connection (28ac) from the cooler (26) into the combustion engine bypass (60).

10. Installation according to one of the preceding claims, **characterized in that** the second valve (28) is an electro-valve.

11. Installation according to claim 1, **characterized in that** a first coolant pump (20) is connected in the coolant circuit (22) and that the installation comprises a second coolant pump (78).

12. Installation according to claim 1, **characterized in that** a coolant pump (78) is connected in the second cooler bypass (56, 62, 66, 70).

13. Installation according to one of the claims 7 to 9, **characterized in that** a coolant pump (78) is connected in the combustion engine bypass (60).

14. Installation according to one of the preceding claims, **characterized in that** the second heat source (80) is an electric heater.

15. Installation according to one of the preceding claims, **characterized in that** an electric machine (16) which can be operated as a generator and which is in driving connection with the combustion engine (12) is connected in the return connection (40, 44, 46, 50).

## Revendications

1. Installation (10) pour refroidir des unités d'entraînement et pour chauffer l'espace intérieur d'un véhicule hybride comprenant un circuit d'agent de refroidissement (22) dans lequel sont connectés en série un moteur à combustion (12), qui forme une première source de chaleur, et un refroidisseur (26), dans lequel :
- dans la direction d'écoulement de l'agent de refroidissement, une liaison aller (32, 36, 38), d'une part, conduit du moteur à combustion (12) au refroidisseur (26), et une liaison retour (40, 44, 46, 50), d'autre part, conduit du refroidisseur (26) au moteur à combustion (12),
- une première valve (24) est connectée dans la liaison aller (32, 36, 38),
- une première section de liaison aller (32, 36) est agencée entre le moteur à combustion (12) et la première valve (24), et une seconde section de liaison aller (38) est agencée entre la première valve (24) et le refroidisseur (26),
- le installation (10) présente une seconde source de chaleur (80) et un échangeur de chaleur (68) pour chauffer l'espace intérieur du véhicule,
- une première dérivation de refroidisseur (52) s'étendant depuis la première valve (24) débouche dans la liaison retour (40, 44, 46, 50), et
- une seconde dérivation de refroidisseur (56, 62, 66, 70) est prévue entre la première section de liaison aller (32, 36) et la liaison retour (40, 44, 46, 50) dans laquelle sont connectés la seconde source de chaleur (80) et l'échangeur de chaleur (68),
**caractérisé en ce que** :
- une seconde valve (28) est connectée dans la liaison retour (40, 44, 46, 50),
- une première section de liaison retour (40, 44) est agencée entre le refroidisseur (26) et la seconde valve (28), et une seconde section de liaison retour (46, 50) est agencée entre la seconde valve (28) et le moteur à combustion (12), et
- la seconde dérivation de refroidisseur (56, 62, 66, 70) débouche dans la première section de liaison retour (40, 44).

2. Installation selon la revendication 1, **caractérisé en ce que** la première dérivation de refroidisseur (52) débouche dans la seconde section de liaison retour (46, 50).

3. Installation selon la revendication 1, **caractérisé en ce que** la première dérivation de refroidisseur (52) débouche dans la première section de liaison retour (40, 44).

4. Installation selon l'une des revendications précédentes, **caractérisé en ce que** la première valve (24) est agencée comme une valve à double acheminement de telle sorte qu'elle permette d'établir, d'une part, une première liaison (24ab) du moteur à combustion (12) au refroidisseur (26) et, d'autre part, une seconde liaison (24ac) du moteur à combustion (12) dans la première dérivation de refroidisseur (52).

5. Installation selon la revendication 4, **caractérisé en ce que** la première valve (24) est une valve thermostatique.

6. Installation selon l'une des revendications précédentes, **caractérisée en ce que** la seconde valve (28) est agencée de telle sorte que, dans un mode de fonctionnement électrique du véhicule hybride, elle permette au moins une interruption dans la liaison retour (40, 44, 46, 50).

7. Installation selon l'une des revendications précédentes, **caractérisé en ce qu'**une dérivation de moteur à combustion (60) s'étendant depuis la seconde valve (28) débouche dans la seconde dérivation de refroidisseur (56, 62, 66, 70).

8. Installation selon la revendication 7, **caractérisé en ce que** la dérivation de moteur à combustion (60) débouche dans une section (56, 62) de la seconde dérivation de refroidisseur (56, 62, 66, 70) qui est agencée entre la première section de liaison aller (32, 36) et l'échangeur de chaleur (68).

9. Installation selon l'une des revendications 7 ou 8, **caractérisé en ce que** la seconde valve (28) est agencée comme une valve à double acheminement de telle sorte qu'elle permette, d'une part, une première liaison (28ab) du refroidisseur (26) au moteur à combustion (12) et, d'autre part, une seconde liaison (28ac) du refroidisseur (26) dans la dérivation de moteur à combustion (60).

10. Installation selon l'une des revendications précédentes, **caractérisé en ce que** la seconde valve (28) est une électrovalve.

11. Installation selon la revendication 1, **caractérisé en ce qu'**une première pompe d'agent de refroidissement (20) est connectée dans le circuit d'agent de refroidissement (22) et **en ce que** le installation comporte une seconde pompe d'agent de refroidissement (78).

12. Installation selon la revendication 1, **caractérisé en ce qu'**une pompe d'agent de refroidissement (78) est connectée dans la seconde dérivation de refroidisseur (56, 62, 66, 70).

13. Installation selon l'une des revendications 7 à 9, **caractérisé en ce qu'**une pompe d'agent de refroidissement (78) est connectée dans la dérivation de moteur à combustion (60).

14. Installation selon l'une des revendications précédentes, **caractérisé en ce que** la seconde source de chaleur (80) est un chauffage électrique.

15. Installation selon l'une des revendications précédentes, **caractérisé en ce qu'**une machine électrique (16) pouvant fonctionner comme génératrice et qui est en liaison d'entraînement avec le moteur à combustion (12) est connectée dans la liaison retour (40, 44, 46, 50).
